# EUROPEAN PATENT SPECIFICATION

(11) **EP 1 956 357 B1**
(45) Date of publication and mention of the grant of the patent: **20.01.2010**
(21) Application number: 07101839.4
(22) Date of filing: 06.02.2007
(51) Int. Cl.: G01N 17/00, G01N 17/02

(54) **Galvanic Corrosion Monitoring And Analysis System**
Galvanisches Korrosionsüberwachungs- und Analysesystem
Système de surveillance et d'analyse de la corrosion galvanique

(43) Date of publication of application: 13.08.2008
(73) Proprietor: Royal Scientific Society, 11941 Al-Jubiaha (JO)
(72) Inventor: Dr. Saeed, Farqad F. M., 11941, Al-Jubiaha (JO)
(74) Representative: Viering, Jentschura & Partner

(56) References cited:
- ROYAL SCIENTIFIC SOCIETY (RSS): "The Royal Scientific Society (RSS) designs a pioneer project named "Galvanic Monitoring and Analyzing System" (GCMAS 2006)"[Online] 5 July 2005 (2005-07-05), XP002445823 Retrieved from the Internet: URL:http://www.rss.gov.jo/whatsnew/news/NE W/corrosion.html> [retrieved on 2007-08-07]
- RUSS BRAUNLING, PAUL DIETRICH: "Corrosion and corrosivity monitoring system" PROCEEDINGS OF THE SPIE: SMART STRUCTURES AND MATERIALS 2005: SENSORS AND SMART STRUCTURES TECHNOLOGIES FOR CIVIL, MECHANICAL, AND AEROSPACE SYSTEMS, vol. 5765, 2005, pages 485-492, XP002445824

## Description

The invention relates to an electrochemical integrated system for measuring the galvanic current values and direction for two to four electrodes.

ROYAL SCIENTIFIC SOCIETY (RSS): "The Royal Scientific Society (RSS) designs a pioneer project named "Galvanic Monitoring and Analyzing System" (GCMAS 2006)"[Online] 5 July 2005 (2005-07-05), Retrieved from the Internet: URL:http://www.rss.gov.jo/whatsnew/news/NEW/corrosion.html> [retrieved on 2007-08-07]" discloses a system to perform laboratory experiments and analyze results to estimate the life time of different metals and alloys. The system consists of an electrochemical cell containing four electrical electrodes plus a reference electrode, two physical quantity probes to measure (pH and temperature) of the electrolyte and an agitator to control the speed of ions in case of mass transfer controlled reactions.

JP57190260 discloses an electrode composing body for measuring electrochemical polarization property, comprising an electrode holder of an insulating substance or a metal and an electrode secured thereto by means of a metallic screw through the medium of a sleeve. In case of a metallic sleeve or electrode holder, an insulating layer is formed between the screw and the sleeve or the electrode holder.

RUSS BRAUNLING, PAUL DIETRICH: "Corrosion and corrosivity monitoring system" PROCEEDINGS OF THE SPIE: SMART STRUCTURES AND MATERIALS 2005: SENSORS AND SMART STRUCTURES TECHNOLOGIES FOR CIVIL; MECHANICAL; AND AEROSPACE SYSTEMS, vol. 5765, 2005, pages 485-492, XP002445824 discloses a further corrosion and corrosivity monitoring system.

### SUMMARY OF THE INVENTION

The invention provides an electrochemical integrated system according to claim 1. Further embodiments of the invention are described in the dependent claims.

An electrochemical system (Software ,Hardware and Galvanic Corrosion Cell) used to measure the Galvanic Currents values and directions for two ,three and four electrodes adjacent and parallel to each other with a non corrosive material working as a barrier or isolator among them, flat metallic specimens of ( 15*30*2 ) mm. made of different metals and alloys, coupled together using the designed interface whereby the galvanic currents values and directions can be monitored at the same time for the whole combination by exposing it to identical corrosive medias (electrolytes) under identical conditions . The electrolyte is kept perpendicular on the flat specimens which are kept at the bottom of the corrosion cell to allow electrochemical reactions ( Oxidations and Reduction) to occur on the surface of the coupled flat specimens which are connected via the interface through a special conducting channels designed in the corrosion cell and made of non corrosive material to be connected through a special electrical wire with the designed interface, so that the researcher could use the control panel of the software package to measure Galvanic currents Values and directions in Micro amperes ,Millie amperes and amperes , Coupling potential using reference electrode, and all to be graphically mapped online with time at any time during the experiment without effecting the continuity of the electrochemical reaction due to the Galvanic Corrosion ,in addition to the above the given system enable the researcher to measure also the Temperature ,pH , and to measure and control the speed of stirring motor (200-4000 RPM) for the electrolyte in the corrosion cell in order to control the migration of ions from the bulk of the electrolyte to the adjacent surface of the flat specimens when the electrochemical reaction is Mass Transfer Controlled. The corrosion cell has special openings to introduce inert gases such as Nitrogen or Argon to get rid of oxygen in order to conduct Activation Controlled electrochemical reactions. The system could be utilized for conducting researches on selecting materials for Alloying, construction and Cathodic Protection by sacrificial anode purposes and to study the localized Pitting and Crevice corrosion phenomena generated due to the galvanic coupling among metals. Also this system enable the researchers to predict new galvanic series of metals by introducing new corrosive environments rather than sea water which is obvious in most International Standards. This system enables the researcher to explore and identify thoroughly the causes of reversal of polarity which occur among metals at certain temperatures and area ratio of Cathode to Anode and cause disastrous situations due to the galvanic action.

### DETAILED DESCRIPTION OF THE INVENTION

GCMAS contains the following items:
1.Software package.
2.Hardware, consists the following:
   a.Interface Card
   b.Data Acquisition Card
3.Galvanic Corrosion Cell
1. Software Package:
The software package shown in figs.(1-6) was designed and fabricated using (AUTOLAB 6) and works under the environment of (WinXP,Me and 2000), needs a paintuim 4 processor with processing speed of (2.8 GHz) and RAM of 256 Mb.
This software is used to conduct coupling through the Interface card and the galvanic corrosion cell among Two,Three and Four electrodes at a time (Flat metallic specimens of (15*30*2) mm.) in order to study the galvanic corrosion problem in industry in addition to the cathodic protection by sacrificial anode.This software controls the whole Galvanic Corrosion experiment. It enables the user to select the name of each mettalic electrode from the list given below each electrode as it is shown in fig.(1) below as well as the no. of electrodes needed to be coupled and up to four electrodes at a time by pointing a green tick on each selected electrode. The user can choose the measurement of coupling potential,Temperature and pH.Also can run the motor by selecting the speed between 200-4000 RPM and the direction of motion (Clock Wise and Counter Clock Wise).
Then the user could insert the time of the experiment in hours and minutes (HH:MM) and sampling time in hours,minutes and seconds (HH:MM:SS) according to the desire experiment.Galvanic currents readings could appears in either (Micro Amps.,Milli Amps. and Amps.) or choosing Auto to let the software choose the unit.The software has the ability to store data (Galvanic currents, coupling potential and summation of currents) and graphical mapping of Galvanic currents and coupling potential with time during the experiment without effecting the continuity of the electrochemical reaction due to the Galvanic Corrosion, in addition to the above, the software package enable the user to monitor the elapsed time, remaining time, captured samples and remaining samples of the experiment as well as the percentage progress bar of the experiment and to pause or quit the experiment at any time.The designed software package enable the user to use a cursor to get the value of Galvanic Currents and coupling potential with time at any point on the graph and has the ability to re gain previously stored data and saved graphs.All above features are shown in figs (1-6) below.
2.Hardware, consists the following:
a.Interface Card:shown in figs.(7 and 8) below was designed and fabricated to measure and control the features given in the designed software, it is placed between the corrosion cell and the Data Acquisition Card.
b.Data Acquisition Card: (shown in fig (7))Collects Data from the interface card to the software.
3.Galvanic Corrosion Cell:
Galvanic Corrosion Cell shown in figs.(9 and 10) and table (1),used to set two, three and four flat metallic specimens at a time of (15*30*2) mm. adjacent and parallel to each other with a non corrosive material working as a barrier among them. The electrolyte is kept perpendicular on the flat specimens which are kept at the bottom of the corrosion cell to allow electrochemical reactions Oxidations and Reduction to occur on the surface of the coupled flat specimens. four conducting channels made of non corrosive material and four electrical wires inserted inside these channels used to connect the flat specimens to the interface.The Galvanic Corrosion Cell enables the user to connect Reference Electrode, Temperature, pH probes and stirring motor for the electrolyte and used also to introduce inert gases such as Nitrogen or Argon to get rid of oxygen in order to conduct Activation Controlled electrochemical reactions.

| ITEM NO. | NAME |
|---|---|
| 1 | Motor + Stirrer fittings |
| 2 | Temperature Probe |
| 3 | pH Probe |
| 4 | Reference Electrode |
| 5 | Four Electrical Connections To Connect The Flat Specimens With The Interface Card |
| 6 | Stirring Rod |
| 7 | Four Flat Metallic Specimen (15*30*2) mm. Holder Made Of Anti Corrosive Material Containing Item No.5. |

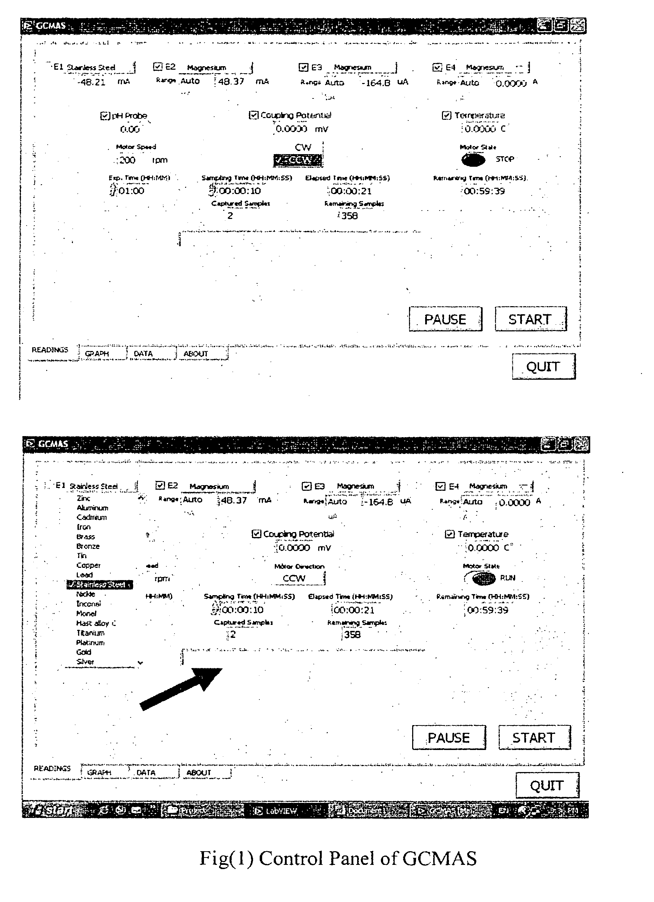

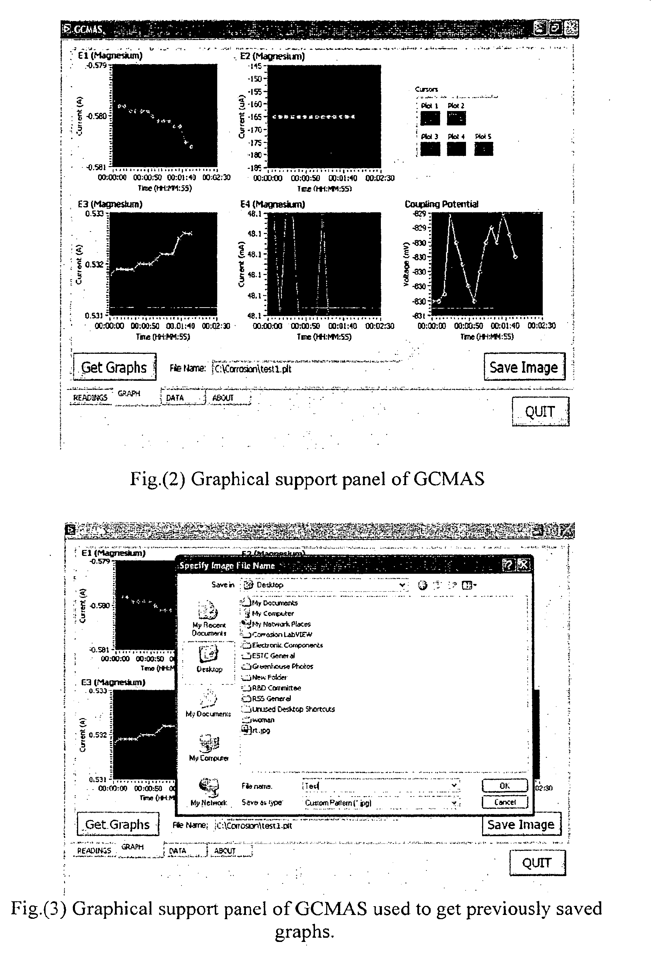

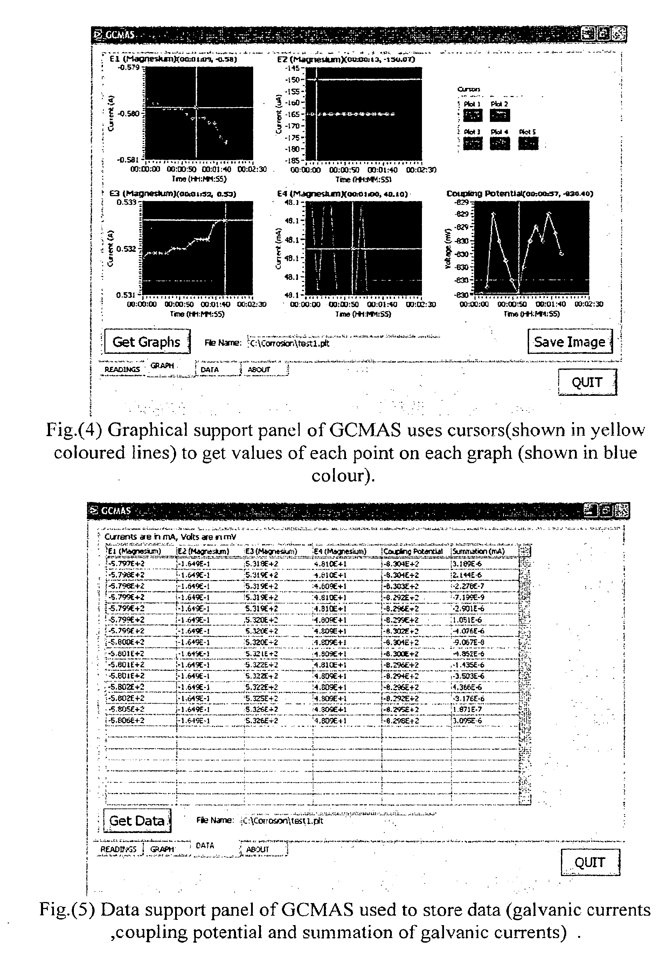

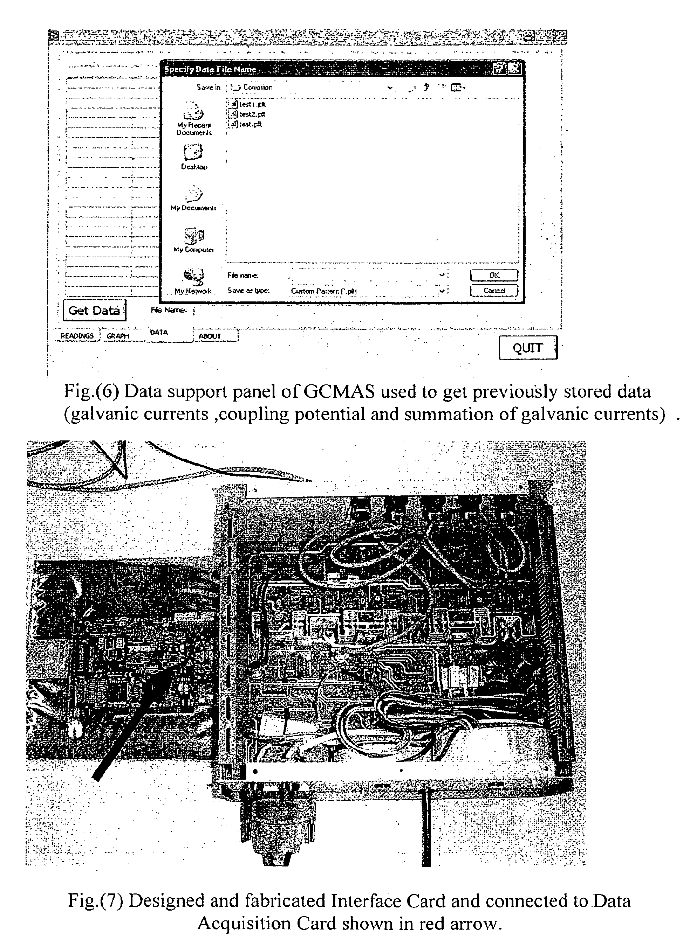

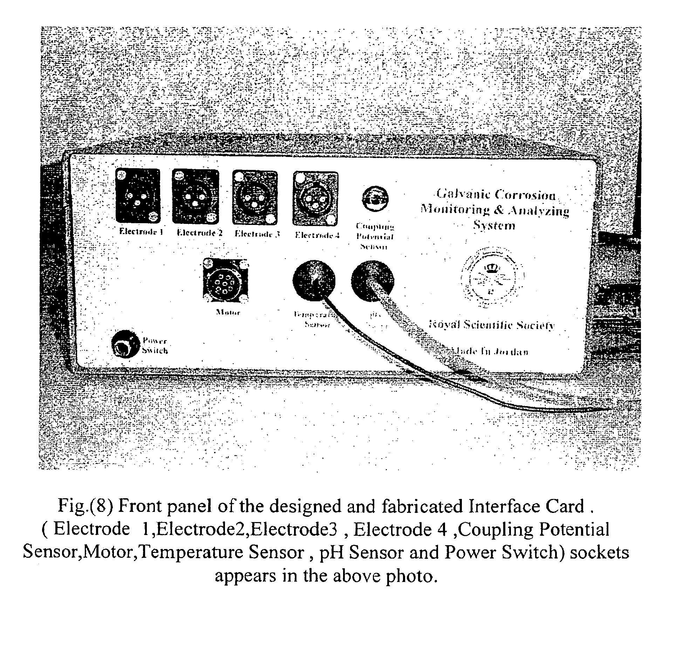

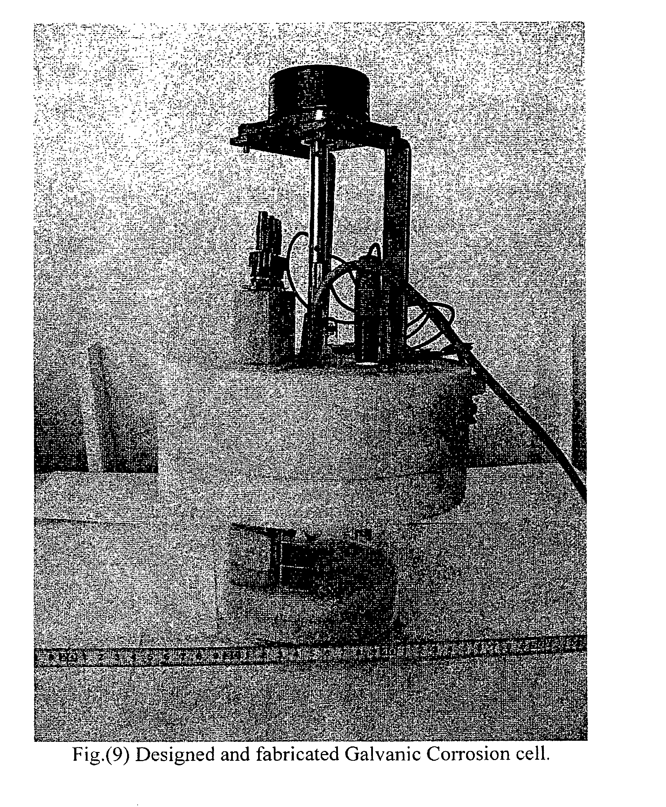

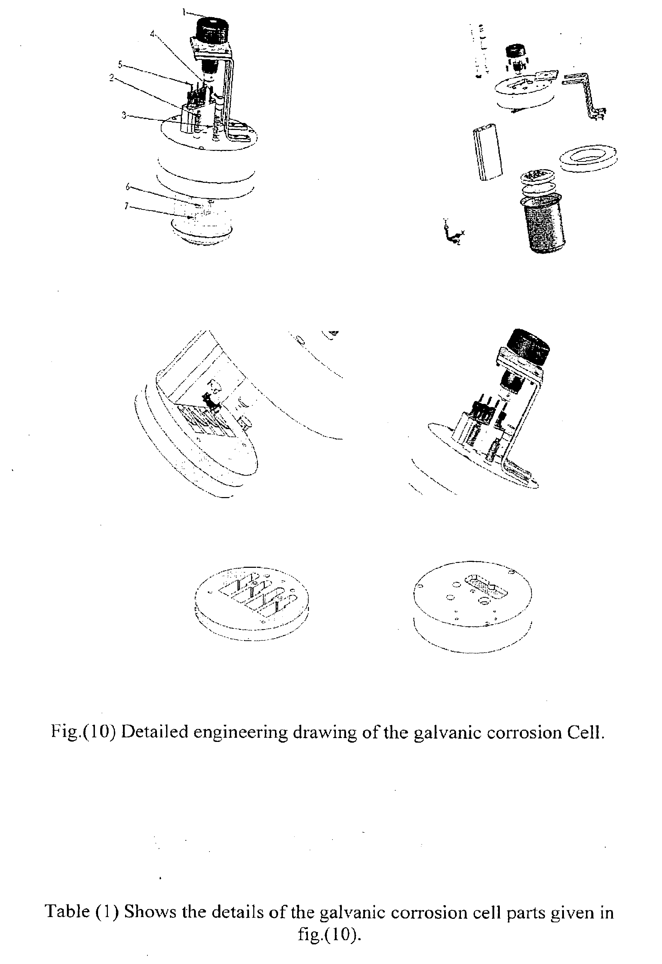

## Claims

1. An electrochemical integrated system for measuring the galvanic current values and directions for two to four electrodes, comprising a corrosion cell and two to four electrodes coupled together via an interface and exposed to electrolyte for allowing electrochemical oxidation and reduction reactions to occur on the surface of the electrodes, **characterized in that** the two to four electrodes are flat metallic specimens (7) made of different metals and alloys, and arranged adjacent and parallel to each other at the bottom of the corrosion cell so that their flat sides face upwardly, wherein the electrodes are coupled to the interface via wires, wherein the system further comprises a holder having channels upwardly opened, within which the electrodes are respectively arranged and inside which the wires are inserted, the holder being of a non corrosive material working as a barrier or isolator among the electrodes, and a stirrer with a stirring rod (6), the stirring rod (6) being arranged above the holder and thereby above the electrodes, wherein the whole combination of specimens (7) is exposed to identical electrolytes under identical conditions allowing monitoring of the galvanic current values and directions at the same time for the whole combination.

2. The system of claim 1 further comprising a reference electrode (4), a temperature probe (2), and a pH probe (3).

3. The system of claim 1, further comprising inert gas such as nitrogen or argon to get rid of oxygen in order to conduct the electrochemical reactions in the corrosion cell.

4. The system of claim 1, further comprising a software package enabling the user to select the no. of flat specimens to be coupled in order to measure the galvanic current values in microampere, milliampere and ampere as well as the directions, to choose measuring or not measuring the coupling potential using a reference electrode, and storing data during the experiment without effecting the continuity of the electrochemical reaction due to the galvanic corrosion, to choose measuring or not measuring the temperature and pH, and to measure and control the speed of a stirring motor and a direction of stirring for the electrolyte in the corrosion cell in order to control the migration of the ions from the bulk of the electrolyte to the adjacent surface of the flat specimens (7) when the electrochemical reaction is mass transfer controlled.

## Patentansprüche

1. Ein elektrochemisches integriertes System zum Messen der galvanischen Stromwerte und Richtungen für zwei bis vier Elektroden, aufweisend ein Korrosionselement und zwei bis vier Elektroden, die über eine Schnittstelle miteinander gekoppelt sind und einem Elektrolyten ausgesetzt sind, um zu ermöglichen, dass elektrochemische Oxidations- und Reduktions-Reaktionen auf der Oberfläche der Elektroden erfolgen, **dadurch gekennzeichnet, dass** die zwei bis vier Elektroden aus verschiedenen Metallen und Legierungen hergestellte flache metallische Proben (7) sind und benachbart und parallel zueinander am Boden des Korrosionselements angeordnet sind, so dass ihre flachen Seiten nach oben gewandt sind, wobei die Elektroden über Drähte mit der Schnittstelle gekoppelt sind, wobei das System ferner aufweist: einen Halter, der nach oben offene Kanäle aufweist, innerhalb derer die Elektroden jeweils angeordnet sind und in die die Drähte eingesetzt sind, wobei der Halter aus einem nicht-korrosiven Material ist, das als Barriere oder Isolator zwischen den Elektroden wirkt, und einen Rührer mit einem Rührstab (6), wobei der Rührstab (6) über dem Halter und somit über den Elektroden angeordnet ist, wobei die gesamte Kombination von Proben (7) identischen Elektrolyten unter identischen Bedingungen ausgesetzt wird, die ein Überwachen der galvanischen Stromwerte und Richtungen gleichzeitig für die gesamte Kombination zu ermöglichen.

2. Das System gemäß Anspruch 1, ferner eine Referenzelektrode (4), eine Temperatursonde (2) und eine pH-Sonde (3) aufweisend.

3. Das System gemäß Anspruch 1, ferner inertes Gas, zum Beispiel Stickstoff oder Argon, zum Beseitigen von Sauerstoff aufweisend, um die elektrochemischen Reaktionen in dem Korrosionselement durchzuführen.

4. Das System gemäß Anspruch 1, ferner ein Softwarepaket aufweisend, das dem Benutzer ermöglicht, die Anzahl von zu koppelnden flachen Proben auszuwählen, um die galvanischen Stromwerte in Mikroampere, Milliampere und Ampere sowie die Richtungen zu messen, das Messen oder Nichtmessen des Kopplungspotentials mittels einer Referenzelektrode auszuwählen und Daten während des Versuchs zu speichern, ohne die Kontinuität der elektrochemischen Reaktion aufgrund der galvanischen Korrosion zu beeinflussen, das Messen oder Nichtmessen der Temperatur und des pH-Wertes auszuwählen, und die Geschwindigkeit eines Rührmotors und eine Rührrichtung für den Elektrolyten in dem Korrosionselement zu messen und zu steuern, um das Wandern der Ionen aus dem Volumen des Elektrolyten zu der benachbarten Fläche der flachen Proben (7) zu steuern, wenn die elektrochemische Reaktion stoffübergangsgesteuert ist.

## Revendications

1. Système intégré électrochimique pour mesurer les valeurs et les directions de courants galvaniques pour deux à quatre électrodes, comprenant une cellule de corrosion et deux à quatre électrodes couplées les unes aux autres par l'intermédiaire d'une interface et exposées à un électrolyte pour permettre à des réactions d'oxydation et de réduction électrochimiques de se produire sur la surface des électrodes, **caractérisé en ce que** les deux à quatre électrodes sont des spécimens métalliques plats (7) constitués de différents métaux et alliages, et sont agencées de façon adjacentes et parallèles les unes aux autres dans le bas de la cellule de corrosion de sorte que leurs côtés plats soient orientés vers le haut, dans lequel les électrodes sont couplées à l'interface par l'intermédiaire de fils, dans lequel le système comprend en outre un support comportant des canaux ouverts vers le haut, dans lequel les électrodes sont respectivement agencées et à l'intérieur desquels les fils sont insérés, le support étant en un matériau non corrosif agissant en tant que barrière ou isolateur parmi les électrodes, et un agitateur comportant une tige d'agitation (6), la tige d'agitation (6) étant agencée au-dessus du support et de ce fait au-dessus des électrodes, dans lequel la combinaison entière de spécimens (7) est exposée à des électrolytes identiques dans des conditions identiques permettant la surveillance des valeurs et des directions de courants galvaniques en même temps pour la combinaison entière.

2. Système selon la revendication 1 comprenant en outre une électrode de référence (4), une sonde de température (2) et une sonde de pH (3).

3. Système selon la revendication 1, comprenant en outre un gaz inerte tel que de l'azote ou de l'argon pour se débarrasser de l'oxygène afin d'effectuer les réactions électrochimiques dans la cellule de corrosion.

4. Système selon la revendication 1, comprenant en outre un progiciel permettant à l'utilisateur de sélectionner le numéro des spécimens plats à accoupler afin de mesurer les valeurs de courants galvaniques en microampère, milliampère et ampère ainsi que les directions, de choisir de mesurer ou de ne pas mesurer le potentiel de couplage en utilisant une électrode de référence, et de mémoriser les données pendant l'expérience sans affecter la continuité de la réaction électrochimique du fait de la corrosion galvanique, de choisir de mesurer ou de ne pas mesurer la température et le pH, et de mesurer et contrôler la vitesse d'un moteur d'agitation et une direction d'agitation pour l'électrolyte dans la cellule de corrosion afin de contrôler la migration des ions de la masse de l'électrolyte vers la surface adjacente des spécimens plats (7) lorsque la réaction électrochimique est à transfert de masse contrôlé.
